# EUROPÄISCHE PATENTANMELDUNG

(11) **EP 1 231 405 A2**
(43) Veröffentlichungstag der Anmeldung: **14.08.2002**
(21) Anmeldenummer: 02000488.3
(22) Anmeldetag: 09.01.2002
(51) Int. Cl.: F16F 9/54, B60G 13/00

(54) **Verbindungsanordnung zwischen einem Dämpferelement einer Fahrzeug-Radaufhängung und der Fahrzeug-Karosserie**

(30) Priorität: 07.02.2001 DE 10105458
(71) Anmelder: Bayerische Motoren Werke Aktiengesellschaft, 80809 München (DE)
(72) Erfinder: Streuber, Frank, 82166 Gräfelfing (DE)

(57) **Zusammenfassung**

Die Erfindung betrifft eine Verbindungsanordnung zwischen einem Dämpferelement (1) einer Fahrzeug-Radaufhängung und der Fahrzeug-Karosserie (5) über ein Elastomerelement (4), welches ohne ein Zwischenelement im wesentlichen formschlüssig mit einem geeignet gestalteten Karosserieblech der Fahrzeug-Karosserie (5) verbunden ist, wobei das vor der Montage weiche Elastomerelement (4) im eingebauten Zustand erheblich komprimiert ist. Bevorzugt ist das Elastomerelement in Richtung der Längs-Achse (1b) des Dämpferelementes (1) durch ein geeignet aufgebrachtes Befestigungselement (3) um zumindest 10% der ursprünglichen Längenabmessung gestaucht. Das Elastomerelement (4) kann zumindest im eingebauten Zustand einen im wesentlichen doppelkegelförmigen Querschnitt oder einen einem Doppel-T-Träger ähnlichen Querschnitt aufweisen, dessen Querschnittsverengung der jeweiligen Form des Karosserieblechs (5) entspricht. Ferner kann das Elastomerelement (4) im Bereich der besagten Querschnittsverengung geteilt sein und besteht bevorzugt aus Polyurethan oder einem anderen Schaum-Kunststoff.

## Beschreibung

Die Erfindung betrifft eine Verbindungsanordnung zwischen einem Dämpferelement einer Fahrzeug-Radaufhängung und der Fahrzeug-Karosserie über ein Elastomerelement, welches ohne ein Zwischenelement im wesentlichen formschlüssig mit einem geeignet gestalteten Karosserieblech der Fahrzeug-Karosserie verbunden ist. Zum technischen Umfeld wird neben der DE-C-31 44 399 insbesondere auf die DE-A-21 00 019 verwiesen.

Üblicherweise erfolgt an Fahrzeugen in deren Fahrwerksbereich die notwendige Verbindung zwischen einem Stoß-Dämpfer und der Karosserie des Fahrzeuges über ein sog. Stützlager, welches im wesentlichen aus einem mit einem Außenflansch versehenen Elastomerelement besteht, das eine bevorzugt zentrische Aufnahme für den Dämpfer, d.h. allgemein für das Dämpferelement aufweist. Dabei ist bzw. wird der zumeist metallische Außenflansch dieses Stützlagers üblicherweise mit der Fahrzeug-Karosserie verschraubt und als Material für das Elastomerelement kommt üblicherweise Gummi zum Einsatz, vgl. bspw. die oben erstgenannte DE-C-31 44 399.

Aus dieser Schilderung wird ersichtlich, daß eine Vormontage des Stützlagers erforderlich ist, d.h. dass dieses bspw. in einem ersten Schritt mit dem Stoß-Dämpfer verbunden wird, und dass danach dieser so geschaffenene Zusammenbau an der Fahrzeug-Karosserie mittels mehrerer Schrauben angeflanscht wird. Demzufolge ist die vollständige Montage relativ aufwendig. Ungünstigstenfalls können dabei zwischen dem Außenflansch des Stützlagers und der Karosserie unerwünschte Spalte entstehen, so dass ggf. sogar spezielle Dichtungen eingesetzt werden müssen, um einen Feuchtigkeits- und Staubeintritt zu vermeiden.

Aus der eingangs zweitgenanten DE-A-21 00 019 ist eine Verbindungsanordnung nach dem Oberbegriff des Anspruchs 1 bekannt, bei der das Elastomerelement direkt in ein geeignet gestaltetes Karosserieblech eingeknüpft und an diesem dann formschlüssig gehalten ist. Auch bei dieser bekanten Verbindungsanordnung handelt es sich beim Elastomerelement um einen Gummiring, der bekanntermaßen zwar gewisse elastische Eigenschaften besitzt, die jedoch nicht so stark gewählt werden können, dass dieser Gummiring mit einfachen Mitteln eingeknüpft werden kann. Zum einen sind nämlich die Elastizitätsmodule der unter Berücksichtigung weiterer Randbedingungen in Frage kommenden Gummimaterialien beschränkt und ferner besteht bei Gummi-Materialien mit hohen Elastizitätsmodulen die Gefahr, dass der Gummiring unerwünschterweise aus der formschlüssigen Verbindung herausgleiten könnte.

Eine demgegenüber verbesserte Verbindungsanordnung nach dem Oberbegriff des Anspruchs 1 aufzuzeigen, ist Aufgabe der vorliegenden Erfindung.
Die Lösung dieser Aufgabe ist dadurch gekennzeichnet, dass das vor der Montage weiche Elastomerelement im eingebauten Zustand erheblich komprimiert ist. Vorteilhafte Ausbildungen sind Inhalt der Unteransprüche.

Wenn - wie im bekannten Stand der Technik - kein sog. Zwischenelement zwischen dem Elastomerelement und der Fahrzeug-Karosserie vorgesehen ist, d.h. wenn das Elastomerelement keinen eigenständigen, eingangs sog. Außenflansch aufweist, sondern auf geeignete Weise direkt mit dem Karosserieblech verbunden bzw. an diesem befestigt ist, ist der eingangs genannte Vormontageschritt des Stützlagers nicht erforderlich. Analog dem bekannten Stand der Technik erfolgt die Verbindung zwischen dem Elastomerelement und der Fzg.-Karosserie im wesentlichen formschlüssig.

Mit den kennzeichnenden Merkmalen des Anspruchs 1 ist nun aber sichergestellt, dass das Elastomerelement zunächst relativ einfach einsetzbar ist und nach erfolgter Montage dennoch sicher im geeignet gestalteten Karosserieblech gehalten ist. Wenn nämlich das Elastomerelement vor der Montage ziemlich weich (und weichelastisch) ist, jedoch durch den Montageprozess bzw. bei der Montage erheblich komprimiert wird, so ist gewährleistet, dass das einmal montierte Elastomerelement sicher und nur in engsten Grenzen minimal verformbar im montierten Zustand verbleibt, während das Einsetzen des Elastomerelementes, d.h. der Montagevorgang aufgrund der anfänglichen Weichheit äußerst einfach durchgeführt werden kann. Ein bevorzugtes Material für das Elastomerelement, welches die vorgeschlagene Kompression zulässt und für den vorliegenden Anwendungsfall gut geeignet ist, ist Polyurethan, in geschäumter Form, oder auch ein anderer geschäumter Kunststoff.

Bevorzugt erfolgt die Kompression des Elastomerelementes beim Montagevorgang selbst, d.h. dass dieses Elastomerelement beim Zusammenbau der Verbindungsanordnung im gewünschten Maß komprimiert wird. Dies kann am einfachsten durch ein geeignet angebrachtes Befestigungselement erfolgen, mit welchem das Elastomerelement zusammen mit dem Dämpferelement an der Fzg.-Karosserie verschraubt, allgemein befestigt wird. Diese Befestigung oder Verschraubung kann dabei im wesentlichen wie im bekannten Stand der Technik erfolgen, wobei auf das freie Ende eines Dämpferrohres oder einer Dämpferstange, welches mit einem Außengewinde versehen ist und welches folglich als sog. Fixierbolzen fungiert, unter Zwischenlage eines Tellers oder einer Stützscheibe eine passende Mutter aufgebracht wird, wobei dieser Teller oder diese Stützscheibe pressend auf das Elastomerelement einwirkt. Dabei muss sich das Elastomerelement mit seiner dem besagten Teller oder der besagten Stützscheibe gegenüberliegenden Stirnseite selbstverständlich auf einer geeigneten Stützfläche abstützen. Diese Stützfläche kann bspw. durch eine weitere Stützscheibe, die am Dämpferelement geeignet befestigt ist, gebildet werden.

Um das Maß der Kompression des Elastomerelementes zu begrenzen und um die Verschraubung der Mutter auf dem Fixierbolzen definiert und fest ausführen zu können, kann noch ein Distanzelement vorgesehen sein, das in einer bevorzugten Ausführungsform als Distanzhülse ausgebildet sein kann, die den Fixierbolzen umgebend in das im Querschnitt ringförmige Elastomerelement eingesetzt ist.

Entsprechend der bisherigen Erläuterung erfolgt die Kompression des Elastomerelementes beim Montagevorgang im wesentlichen in Richtung der Längs-Achse des Dämpferelementes, wenn dessen Befestigung wie üblich und geschildert gestaltet ist. Dabei hat sich gezeigt, dass eine Kompression des Dämpferelementes, die zumindest 10% der ursprünglichen Längenabmessung in Richtung dieser Achse ausmacht, bereits ausreichend ist. Hatte das Elastomerelement vor der Montage bspw. eine in Achsrichtung des Dämpferelementes gemessene Länge von 40 mm, so kann es für eine sichere erfindungsgemäße Montage ausreichend sein, wenn das Elastomerelement im eingebauten Zustand eine Länge von 36 mm besitzt. In Abhängigkeit von den Material-Eigenschaften des Elastomerelementes kann jedoch auch eine 15%ige Kompression (bspw. von 40 mm Länge auf 34 mm Länge) oder eine Kompression um 20% (von 40 mm auf 32 mm) vorteilhaft sein. Ferner kann diese Kompression des Elastomerelementes nicht nur in Richtung der Längs-Achse des Dämpferelementes erfolgen, sondern selbstverständlich auch in dazu senkrechter Richtung. Diese letztgenannte Quer-Kompression kann dabei zum einen alleine durch das Einsetzen des Elastomerelementes in das geeignet gestaltete, die besagte formschlüssige Verbindung ermöglichende Karosserieblech erfolgen. Daneben kann diese sog. Quer-Kompression aber bspw. auch durch die bereits genannte Distanzhülse erfolgen, die in das quasi rohrförmige Elastomerelement eingesetzt ist. Bspw. kann der freie Innendurchmesser des (im Querschnitt ringförmigen) Elastomerelementes vor der Montage 28 mm betragen, während der Außendurchmesser der einzusetzenden Distanzhülse bspw. 30 mm betragen kann.

Wie bereits erwähnt ist das Elastomerelement formschlüssig mit dem geeignet gestalteten Karosserieblech verbunden, wozu das Elastomerelement bspw. einen im wesentlichen doppelkegelförmigen Querschnitt aufweisen kann, an dessen Querschnittsverengung das Karosserieblech angepaßt ist bzw. dessen Querschnittsverengung der Form des Karosserieblechs entspricht. Neben der Doppelkegelform sind aber auch andere Formgebungen möglich, die eine formschlüssige Verbindung erlauben. Wesentlich ist zur Erzielung dieser formschlüssigen Verbindung, daß Hinterschnittbereiche vorgesehen sind, die bspw. auch dann vorliegen wenn das rotationssymmetrische Elastomerelement einen Querschnitt aufweist, der demjenigen eines Doppel-T-Trägers ähnlich ist. Stets wird mit einer derartigen formschlüssigen Verbindung eine einfache und insbesondere sichere Montage des Elastomerelementes in bzw. an der Fahrzeug-Karosserie ermöglicht.

Im übrigen muss für eine erfindungsgemäße Verbindungsanordnung kein einstückiges oder einteiliges Elastomerelement zu Einsatz kommen, sondern es kann dieses - insbesondere im Hinblick auf einen ggf. erforderlichen Montageablauf auch geteilt (und somit zwei- oder mehrteilig) ausgebildet sein, und zwar bevorzugt im Bereich der besagten Querschnittsverengung. Dann kann die eine Hälfte des Elastomerelementes quasi von oben und die andere Hälfte des Elastomerelementes quasi von unten in die geeignet geformte Karosseriestruktur eingesetzt werden, wobei gegenüber dem Ausgangszustand, in welchem die entsprechend aufeinander gesetzten Elastomerelement-Teile eine sog. Ursprungs-Abmessung aufweisen, diese zusammengesetzten Elastomerelement-Teile im montierten Zustand gegenüber dieser Ursprungs-Abmessung erheblich komprimiert sind.

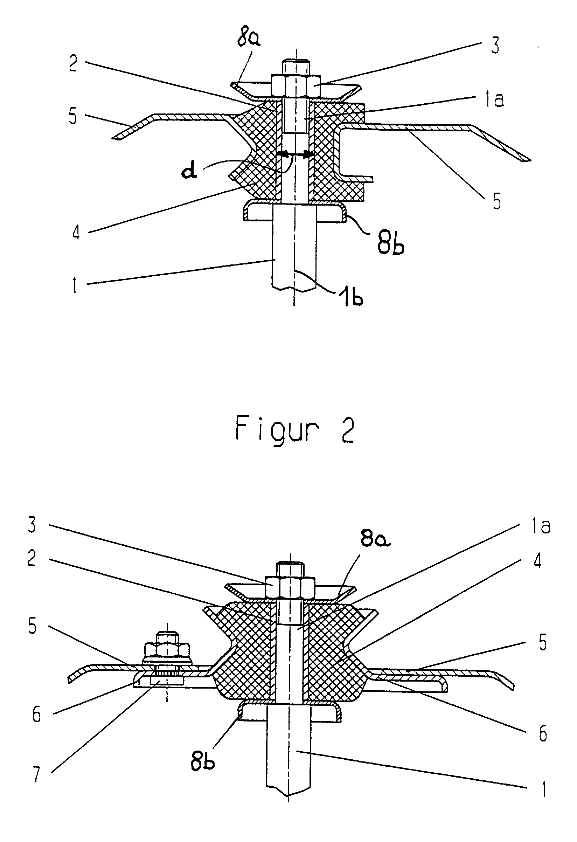

Im folgenden wird die Erfindung anhand eines bevorzugten Ausführungsbeispieles weiter erläutert, wobei in der beigefügten **Figur 1** zwei mögliche Querschnitte einer erfindungsgemäßen Verbindungsanordnung dargestellt sind, während in **Figur 2** der übliche Stand der Technik wiedergegeben ist. Gleiche Elemente sind dabei mit gleichen Bezugsziffern versehen.

Mit der Bezugsziffer 1 ist ein Stoß-Dämpfer (allgemein: Dämpferelement) bezeichnet, der/(das) Bestandteil einer Fahrzeug-Radaufhängung ist. An einem zumindest in seinem Endbereich mit einem Außengewinde versehenen Fixierbolzen 1a dieses Dämpfers 1 ist unter Zwischenlage einer Distanzhülse 2 über eine auf das Außengewinde aufgebrachte Mutter 3 (allgemein als Befestigungselement 3 bezeichnet) in Zusammenwirken mit zwei Stützscheiben 8a , 8b ein sog. Elastomerelement 4 befestigt, über welches der Dämpfer 1 letztlich an der Karosserie 5 dieses Fahrzeuges befestigt ist bzw. wird. Im bekannten Stand der Technik nach **Fig.2** ist dieses sog. Stützlager, welches neben dem Elastomerelement 4 einen dieses umgebenden metallischen Außenflansch 6 aufweist, über diesen Außenflansch 6 mit der Fahrzeug-Karosserie 5 verschraubt, und zwar über mehrere Schraubverbindungen 7, von denen im hier gezeigten Querschnitt lediglich eine einzige sichtbar ist.

Bei den Ausführungsbeispielen der vorliegenden Erfindung nach **Fig.**1 hingegen ist die für die Funktion des besagten Stützlagers notwendige Außenkontur des hier nicht mehr vorhandenen Außenflansches in die Fahrzeug-Karosserie 5 integriert, d.h. das Elastomerelement 4 ist direkt mit der Karosserie 5 bzw. dem Karosserieblech 5 verbunden, ohne daß zwischen diesen Bauteilen irgendein Zwischenelement (wie der besagte Außenflansch nach Fig.2 o.ä.) vorgesehen ist. An dieser Stelle sei ausdrücklich darauf hingewiesen, daß dieses Karosserieblech 5 selbstverständlich wieder mit anderen Karosserieblechen verbunden sein kann, bspw. durch Schweißung oder Klebung. Wesentlich ist, daß dieses mit der Bezugsziffer 5 bezeichnete Blech oder dgl. der Karosserie des Fahrzeuges zugeordnet ist, und nicht dem Stützlager bzw. dem Elastomerelement 4.

Demzufolge ergibt sich für die Montage des erfindungsgemäßen Stützlagers bzw. für die erfindungsgemäße Verbindungsanordnung der folgende Ablauf: Zunächst wird wie üblich die Karosserie des Fahrzeuges gefertigt und somit auch das mit der Bezugsziffer 5 bezeichnete Bauelement, welches ein Karosserieblech ist. Anschließend wird das Elastomerelement 4, welches bevorzugt dauerfest ausgelegt sein sollte, im wesentlichen alleine, d.h. ohne die weiteren Bestandteile des Stützlagers bzw. insbesondere ohne den Dämpfer 1 an der Karosserie 5 montiert, d.h. dort auf noch näher erläuterte Weise und wie figürlich dargestellt befestigt. Gleichzeitig oder vorab oder darauf folgend kann/können auch die Distanzhüse 2 und/oder die Stützscheibe(n) 8a, 8b angebracht werden. Im letzten Schritt wird dann der Dämpfer 1 mit seinem Fixierbolzen 1a wie im bekannten Stand der Technik eingesetzt, wobei die Distanzhülse 2 sowie die Stützscheiben 8a, 8b auch zusammen mit dem Dämpfer 1 montiert werden können. Im übrigen sollte auch eine Demontage (in umgekehrter Reihenfolge) zu Reparaturzwecken möglich sein.

Was die Verbindung zwischen dem Elastomerelement 4 und dem Karosserieblech 5 betrifft, so ist diese im wesentlichen formschlüssig ausgebildet. Beidseitig der Längs-Achse 1b des Dämpferelementes 1 bzw. Dämpferrohres ist das bezüglich dieser Achse 1b rotationssymmetrische Elastomerelement 4 in zwei verschiedenen Ausgestaltungen dargestellt, woraus sich auch für das Karosserie-Element 5 unterschiedliche Ausformungen ergeben. Bspw. kann das Elastomerelement 4 einen im wesentlichen doppelkegelförmigen Querschnitt aufweisen, an dessen Querschnittsverengung das Karosserieblech 5 angepaßt ist. Dies ermöglicht eine einfache und insbesondere sichere Montage des Elastomerelementes 4 in der Fahrzeug-Karosserie 5, da das Elastomerelement 4 quasi in die Karosserie 5 eingeclipst wird bzw. werden kann. Alternativ kann der Querschnitt des Elastomerelementes 4 demjenigen eines Doppel-T-Trägers ähneln.

Ein wesentlicher Aspekt ist, dass das vor der Montage relativ weiche Elastomerelement 4 im dargestellten eingebauten Zustand nennenswert komprimiert ist, was im wesentlichen durch das Anziehen des Befestigungselementes 3 bzw. der Mutter 3 erfolgt, da hierbei das Elastomerelement 4 in Richtung der Achse 1b gestaucht, d.h. zwischen den beiden Stützscheiben 8a, 8b gepresst wird. Wie bereits erwähnt stützt sich die untere Stützscheibe 8b an einem nicht mit einer separaten Bezugsziffer bezeichneten Absatz des Dämpferelementes 1 ab, so dass mit Festziehen der Mutter 3 die obere Stützscheibe 8a nach unten zur unteren Stützscheibe 8b hin verschoben wird. Das Maß dieser Verschiebung und somit auch das Maß der hierbei erfolgenden Kompression des Elastomerelementes 4 wird dabei durch die Distanzhülse 2, genauer durch deren Länge in Achsrichtung 1b bestimmt.

Bevorzugt besteht das Elastomerelement aus PUR und kann bspw. vor der Montage eine in Achsrichtung 1b gemessene Länge von 40 mm besitzen. Im eingebauten Zustand beträgt dieses Längenmaß bspw. nurmehr 34 mm, so dass das Elastomerelement um 15% der ursprünglichen Längenabmessung gestaucht wurde. Eine weitere Kompression des zunächst weichelastischen Elastomerelementes 4 kann im übrigen auch bereits durch das Einsetzen der Distanzhülse 2 erfolgen, deren Außendurchmesser d bspw. 30 mm betrage, während der entsprechende Innendurchmesser des im Querschnitt ringförmigen Elastomerelementes vor dem Einsetzen der Distanzhülse nur 28 mm betragen kann. Auch alleine durch das Einsetzen oder Einclipsen des Elastomerelementes 4 in die Fzg.-Karosserie 5 kann bereits eine teilweise Kompression desselben erfolgen.

Selbstverständlich sind weitere formschlüssige oder allgemein direkte Verbindungen zwischen dem Elastomerelement 4 und der Karosserie 5 möglich, wie überhaupt eine Vielzahl weiterer Details insbesondere konstruktiver Art durchaus abweichend vom gezeigten Ausführungsbeispiel gestaltet sein kann, ohne den Inhalt der Patentansprüche zu verlassen. Stets treten die signifikanten Vorteile der erfindungsgemäßen Verbindungsanordnung zum Vorschein, nämlich der Entfall von Einzelteilen, die Reduzierung der Vormontagezeit und der Gesamtmontagezeit (so ist z.B. keine zusätzliche Dichtung erforderlich, da kein Spalt zwischen Elastomerelement 4 und Karosserie 5 auftreten kann), sowie eine gesteigerte Funktionalität des Stützlagers. Dabei kann, was figürlich nicht dargestellt ist, das Elastomerelement auch geteilt ausgebildet sein, und zwar bevorzugt im Bereich von desen Querschnittsverengung. Dies ermöglicht es, die eine Hälfte des Elastomerelementes (in der Figurendarstellung) von oben her und die andere Hälfte von unten her einzusetzen. Auch hier gilt, dass analog den dargestellten Ausführungsbeispielen das vor der Montage weiche Material des Elastomerelementes 4 durch den Montageprozess im eingebauten Zustand in ein Hart-Elastomer überführt wird, und zwar durch Verspannen. Über das Ausmaß dieser Verspannung ist dabei die Federrate des Elastomerelementes 4 beeinflussbar bzw. festlegbar.

## Patentansprüche

1. Verbindungsanordnung zwischen einem Dämpferelement (1) einer Fahrzeug-Radaufhängung und der Fahrzeug-Karosserie (5) über ein Elastomerelement (4), welches ohne ein Zwischenelement im wesentlichen formschlüssig mit einem geeignet gestalteten Karosserieblech der Fahrzeug-Karosserie (5) verbunden ist,
**dadurch gekennzeichnet, dass** das vor der Montage weiche Elastomerelement (4) im eingebauten Zustand erheblich komprimiert ist.

2. Verbindungsanordnung nach Anspruch 1,
**dadurch gekennzeichnet, dass** das Elastomerelement in Richtung der Längs-Achse (1b) des Dämpferelementes (1) durch ein geeignet angebrachtes Befestigungselement (3) um zumindest 10% der ursprünglichen Längenabmessung gestaucht ist.

3. Verbindungsanordnung nach Anspruch 1 oder 2,
**dadurch gekennzeichnet, daß** das Elastomerelement (4) zumindest im eingebauten Zustand einen im wesentlichen doppelkegelförmigen Querschnitt aufweist, dessen Querschnittsverengung der Form des Karosserieblechs (5) entspricht.

4. Verbindungsanordnung nach Anspruch 1 oder 2,
**dadurch gekennzeichnet, dass** das rotationssymmetrische Elastomerelement (4) im eingebauten Zustand einen einem Doppel-T-Träger ähnlichen Querschnitt aufweist, dessen Querschnittsverengung der Form des Karosserieblechs (5) entspricht.

5. Verbindungsanordnung nach einem der vorangegangenen Ansprüche
**dadurch gekennzeichnet, dass** das Elastomerelement (4) im Bereich der besagten Querschnittsverengung geteilt ist.

6. Verbindungsanordnung nach einem der vorangegangenen Ansprüche
**dadurch gekennzeichnet, dass** das Elastomerelement (4) aus Polyurethan oder einem anderen Schaum-Kunststoff besteht.
